# EUROPÄISCHE PATENTSCHRIFT

(11) **EP 3 028 580 B1**
(45) Veröffentlichungstag und Bekanntmachung des Hinweises auf die Patenterteilung: **29.08.2018**
(21) Anmeldenummer: 15197485.4
(22) Anmeldetag: 02.12.2015
(51) Int. Cl.: A23G 3/34

(54) **VERFAHREN ZUR HERSTELLUNG EINER WASSERFREIEN AROMAPASTE UND EINE NACH DIESEM VERFAHREN HERGESTELLTE AROMAPASTE**
METHOD FOR PREPARATION OF AN ANHYDROUS AROMA PASTE AND AROMA PASTE MADE ACCORDING TO THIS METHOD
PROCEDE DE FABRICATION D'UNE PATE AROMATIQUE SANS EAU ET D'UNE PATE AROMATIQUE FABRIQUEE SELON LEDIT PROCEDE

(30) Priorität: 03.12.2014 CH 18582014
(43) Veröffentlichungstag der Anmeldung: 08.06.2016
(73) Patentinhaber: Hans Kaspar AG, 5621 Zufikon (CH)
(72) Erfinder: GÄCHTER, Stephan, 5621 Zufikon (CH)
(74) Vertreter: Spierenburg, Pieter

(56) Entgegenhaltungen:
- EP-A1- 1 405 567
- WO-A1-2009/013473
- GB-A- 1 013 372
- US-A- 4 839 193
- US-A- 5 762 990
- US-B1- 6 528 104

## Beschreibung

Die Erfindung betrifft ein Verfahren zur Herstellung einer Aromapaste und eine nach dem Verfahren hergestellte Aromapaste.

Bei der heute bekannten Herstellung von hundertprozentigen natürlichen Aromapasten werden im Wesentlichen folgende zwei Verfahren eingesetzt:
In einem ersten Verfahren werden Splitter aus beispielsweise karamelisierten Zucker oder Nüssen mittels einer Vibrationsmühle, Hammermühle, Kugelmühle oder dergleichen zu kleinen Partikeln vermahlen, so dass eine kleinste Korngrösse von 50 µm erreicht werden kann. Dabei wird das Mahlgut gleichzeitig vermahlen und zu einer Paste vermischt. Bei diesem Verfahren kann die Korngrösse nicht weiter verringert werden, so dass die so erhaltenen Aromapasten, welche zum Aromatisieren von z.B. Schokoladen- oder Pralinenfüllungen eingesetzt werden, immer noch ein leicht körniges oder sandiges Empfinden auf der Zunge eines Konsumenten ergibt.

In einem zweiten Verfahren, das als Kochverfahren bekannt ist, werden Zucker, Wasser und weitere Zutaten wie diverse Milchpulver zu Aroma- oder Karamelpasten verarbeitet, welche zwar die Korngrösse der erhaltenen Partikel von kleiner als 20 µm problemlos erreichen, jedoch auf Wasser basieren, und somit in z.B. fettbasierten Schokolade- oder Pralinenfüllungen nicht als Aromapasten einsetzbar sind. Dieses Kochverfahren findet auf einfachen Gas- oder Dampfkochanlagen bei einer Temperatur von 150 °C bis 200 °C statt. Ist dieser Kochprozess abgeschlossen, sind die so hergestellten Massen als Karamelsirup oder Karamelpaste bereit zur weiteren Verarbeitung.

US 5 762 990 A zeigt eine Fettzusammensetzung für eine Nussfüllung, wobei sie Emulgator(en) in einer Gesamtmenge von 1,0 - 10,0 Gew.% in einem Fett enthält, das 35 - 60 Gew.% 1,3 - Distearo-2-olein umfasst und einen Festfettgehalt von 70-85%/20°C, 50-75%/30°C, 5-50%/35°C und 3% oder weniger /40°C aufweist.

GB 1 013 372 A offenbart ein Verfahren zur Herstellung von Cremes für Konditorwaren, z.B. Füllungen für Waffeln oder dergleichen, wobei Fett mit Zucker und anderen Zutaten geschlagen wird. Als Fett wird eine Fraktion von Palmöl verwendet, die erhalten wird, wenn man aus Palmöl die Bestandteile mit einem Schmelzpunkt über 30°C im Ausmass von 15 bis 45 Gew.-% entfernt, und welche Fraktion gegebenenfalls ganz oder teilweise bis zur Erreichung eines Gleitschmelzpunktes zwischen 30 und 45°C gehärtet wird.

US 6 528 104 B1 zeigt eine aromatisierte Füllung, mit eine geringe Wasseranteil. Die Füllung enthält einen Aromastoff, ein Speiseöl und Feuchthaltemittel. Das Speiseöl kann ein Öl mit einer hohen und einer niedrigen Schmelztemperatur umfassen. Falls verwendet, kann das Öl mit dem hohen Schmelzpunkt, während der Bildung der Füllung als Kristallisationsnukleator dienen.

WO 2009/013473 A1 zeigt eine Süßwarenzusammensetzung, welche für Füllungen geeignet ist, umfassend einen oder mehrere Süßwarenzusatzstoffe, ausgewählt aus Zucker, Kakaopulver, Milchpulver, Joghurtpulver, Geschmacksstoffen und Emulgatoren, zusammen mit einer Fettmischung.

US 4 839 193 A offenbart ein Verfahren zur Herstellung von Marzipan, ausgehend von ganzen geschälten, mit Zucker und verschiedenen Zusatzstoffen gemischten Mandeln, bei dem die gesamte Herstellung durch Kochen-Extrusion im Inneren einer Förderschnecke in mehreren kontinuierlich aufeinanderfolgenden Schritten durchgeführt wird. Wobei das Verfahren von stromauf nach stromab in Förderrichtung gesehen, einen Mischvorgang, einen Erhitzungsvorgang, einen Entwässerungsvorgang und eine Extrusion beinhaltet.

EP 1 405 567 A1 zeigt ein Verfahren zur Herstellung von Nougatmasse, gekennzeichnet durch die folgenden Schritte: man gibt bei herrschender Raumtemperatur hartes, unter Umständen mit blanchierten Mandeln versetztes Nougat in eine geschlossene Zerkleinerungsvorrichtung; es erfolgt bei im Wesentlichen konstanter Temperatur eine Vorzerkleinerung dieses Nougats, bis sich eine Mischung mit einer homogenen Körnigkeit gebildet hat; man lässt die Temperatur der Zerkleinerungsvorrichtung bei fortwährender Zerkleinerung auf 40 bis 50°C steigen, so dass eine Nougatmasse entsteht; die Zerkleinerungsvorrichtung wird rasch bis auf eine Temperatur in der Grössenordnung von 2 bis 5° C abgekühlt; das Zerkleinern wird unter Beibehaltung einer niedrigen Temperatur fortgesetzt, bis eine Masse mit der gewünschten Körnigkeit entstanden ist; und man lässt die Temperatur der Zerkleinerungsvorrichtung bei weiterhin stattfindender Zerkleinerung wieder bis auf einen Wert nahe der Raumtemperatur ansteigen.

Bislang ist es nicht gelungen, eine wasserfreie Aromapaste herzustellen, deren Partikel eine Korngrösse von weniger als 20 µm aufweisen.

Der vorliegenden Erfindung liegt nun die Aufgabe zugrunde, die Herstellung einer Aromapaste anzugeben, welche einerseits wasserfrei ist und andererseits eine Korngrösse von weniger als 20 µm erreicht.

Diese Aufgabe wird durch ein Verfahren zur Herstellung einer wasserfreien Aromapaste mit den Merkmalen des Patentanspruchs 1 und durch eine nach diesem Verfahren hergestellte Aromapaste gemäss Anspruch 7 gelöst.

Die Erfindung hat den Vorteil, dass sich das aus dem Herstellungsprozess selbst entwickelte Aroma intensiviert, welche durch eine Oberflächenvergrösserung der Gesamtheit der Partikel von weniger als 20 µm erreicht wird. Das noch in der hergestellten Paste enthaltene gebundene Wasser ist äusserst gering, so dass keine Konservierungsstoffe mehr beigegeben werden müssen, und auch eine spezielle Lagerkühlung entfällt.

Weitere Vorteile der Erfindung folgen aus den abhängigen Patentansprüchen und aus der nachfolgenden Beschreibung, in welcher die Erfindung anhand eines in den schematischen Zeichnungen dargestellten Ausführungsbeispieles näher erläutert wird. Es zeigt:

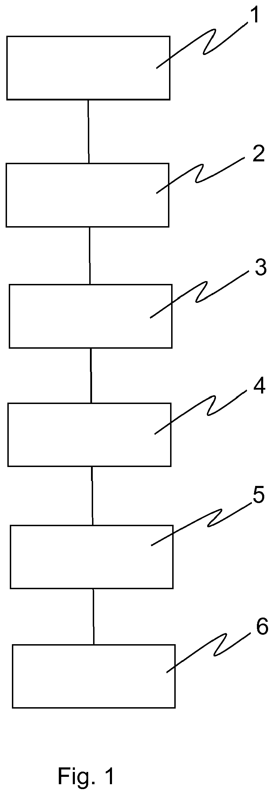

- Fig. 1: die Schritte des Herstellungsverfahrens für eine Aromapaste.

Unter "wasserfrei" wird eine Aromapaste bezeichnet, wenn der Anteil an gebundenem Wasser weniger als 2 Gew.-% und der Anteil an Trockensubstanz grösser als 98 Gew.-% ist. Die wasserfreie Aromapaste ist somit fettbasiert und kann daher zum Beispiel für fettbasierte Schokolade- oder Pralinenfüllungen eingesetzt werden. Bekanntlich kann man eine wasserhaltige Aromapaste nicht mit einer fetthaltigen Schokolademasse vermischen, da diese beiden sofort scheiden oder höchstens eine Emulsion bilden würden.

In Figur 1 sind die Schritte eines Verfahrens zur Herstellung einer wasserfreien Aromapaste mit einer Korngrösse von weniger als 20 µm schematisch dargestellt. In einem ersten Schritt 1 werden Zucker und Pulver auf Milch- oder Fruchtbasis, wie unterschiedliche getrocknete Milchpulver, Erdbeerpulver oder Zitronenpulver, in einen Schmelzkessel in einem Verhältnis von 8:3 bis 3:1, vorzugsweise 5:2, eingegeben und auf einer Temperatur von 130 bis 200 °C gebracht und während etwa 10 bis 40 Minuten, vorzugsweise 20 bis 30 Minuten, zu einer geschmolzenen heissen Masse vermischt und erhitzt. In einem zweiten Schritt 2 wird diese geschmolzene heisse Masse mittels einer Kühlstrasse gekühlt, und anschliessend wird die abgekühlte Masse in einem dritten Schritt 3 mittels eines mechanischen Zerkleinerers zu Nougatsplittern bis 4 mm Grösse zersplittert oder zerkleinert. Diese Nougatsplitter werden im Schritt 4 mit Pflanzenfett oder -öl in einem Gewichtsverhältnis von 4:1 bis 3:2, vorzugsweise 2:1, zu einer breiigen Masse gemischt. Dazu wird vorzugsweise eine Waage benutzt. Im Schritt 5 wird die breiige Masse in ein Conchiersystem eingeführt und während etwa 10 bis 30 Stunden, vorzugsweise etwa 15 bis 24 Stunden, bei einer Temperatur von 40 bis 60 °C, vorzugsweise zwischen 50 und 55°C, zerkleinert, bis diese Splitter in der Paste eine Korngrösse von weniger als 20 µm erreicht haben. Dazu werden in regelmässigen Zeitabständen Proben von der Paste genommen und die Korngrösse der Partikel mit einem Mikrometer gemessen.

Die fertige Paste wird dann im Schritt 6 in luftdicht abschliessbare Produktgebinde abgefüllt.

Als Conchiersystem wird beispielsweise eine Conche der Firma Maclntyre Chocolate Systems, Arbroath, Scotland, Vereinigtes Königreich, oder eine Einwellenconche FRISSE-ELK der Firma Bühler, Uzwil, Schweiz eingesetzt.

Mit dem oben beschrieben Verfahren sind unter anderem folgende Aromapasten hergestellt worden:

### Beispiel 1

In einer Vorproduktion werden Nougatsplitter hergestellt aus 21 kg Zucker und 7 kg Vollmilchpulver . Die Nougatsplitter von 28 kg werden mit 11 kg Palmkernfett, 2 kg Sojaöl, 0.2 kg Salz und 0.2 kg Lecithin im Conchiersystem vermischt und zerkleinert, bis eine erste wasserfreie natürliche Aromapaste von 41.4 kg entsteht.

### Beispiel 2

In einer Vorproduktion werden Nougatsplitter hergestellt aus 21 kg Zucker, 4 kg Zitronenpaste und 4 kg Molkenpulver. Die Nougatsplitter von 29 kg werden mit 10 kg Kokosfett, 2 kg Rapsöl, 0.1 kg Salz und 0.2 kg Lecithin im Conchiersystem vermischt und zerkleinert, bis eine zweite wasserfreie natürliche Aromapaste von 41.3 kg entsteht.

### Beispiel 3

In einer Vorproduktion werden Nougatsplitter hergestellt aus 22 kg Zucker, 5 kg Magermilchpulver und 2 kg Rahmpulver hergestellt. Die Nougatsplitter von 29 kg werden mit 15 kg Kakaobutter, 2 kg Rapsöl, 0.5 kg Salz und 0.2 kg Lecithin im Conchiersystem vermischt und zerkleinert, bis eine dritte wasserfreie natürliche Aromapaste von 46.7 kg entsteht.

Das Pflanzenfett oder Pflanzenöl kann entweder auf der Basis aus ausschliesslich einem der folgenden Bestandteilen: Palmfrüchten, Kokosfrüchten, Raps, Kakaobohnen, Milch, oder aus einer Kombination von zwei oder mehreren dieser Bestandteilen bestehen.

Das Pflanzenfett oder Pflanzenöl kann somit einzeln Palmfett oder Palmöl, Kokosfett oder Kokosöl, Rapsfett oder Rapsöl, Kakoafett oder Kakoaöl oder Milchfett oder Milchöl oder eine Kombination von zwei oder mehr davon aufweisen.

Durch die Oberflächenvergrösserung der Gesamtheit der Partikel kann sich das Aroma der Partikel besser entfalten, wodurch das Aromabild für die spezifischen Anwendungen erheblich intensiviert wird. Durch den zweifachen Erhitzungsprozess (im Schritt 1 und im Schritt 5) verflüchtigt sich auch ein Teil des natürlich in den Rohstoffen vorkommenden, gebundenen Wassers. Dabei wird der Anteil der Trockensubstanz auf über 98 Gew.-% erhöht. Durch die geringe Menge an noch verbleibendem gebundenem Wasser im Endprodukt ist die Haltbarkeit wesentlich grösser, so dass keine Konservierungsstoffe mehr beigefügt werden müssen und auch eine spezielle Lagerkühlung nicht mehr notwendig ist. Die so erhaltenen wasserfreien Aromapasten können zusätzlich in weiteren Produktanwendungen eingesetzt werden, wie beispielsweise für fettbasierte Schokolade- oder Pralinenfüllungen.

Obwohl das Verfahren vornehmlich die Herstellung von natürlichen Aromapasten betrifft, können mit diesem Verfahren auch Aromapasten mit künstlichen Aromen hergestellt werden. In diesem Fall werden aufgrund der starken Geschmacksintensität nur etwa 0.1 bis 0.2 Gew.-% an künstlichen Aromen in die Masse hinzugefügt.

## Patentansprüche

1. Verfahren zur Herstellung einer wasserfreien Aromapaste, **dadurch gekennzeichnet, dass** in einem ersten Schritt (1) Zucker und einem Pulver auf Milch- oder Fruchtbasis in einen Schmelzkessel in einem Verhältnis von 8:3 bis 3:1, vorzugsweise5:2, eingegeben werden und bei einer Temperatur von 130 bis 200 °C während 10 bis 40 Minuten, vorzugsweise 20 bis 30 Minuten, zu einer geschmolzenen heissen Masse vermischt und erhitzt werden, in einem zweiten Schritt (2) die geschmolzene heisse Masse mittels einer Kühlstrasse gekühlt wird, in einem dritten Schritt (3) die abgekühlte Masse mittels eines mechanischen Zerkleinerers zu Nougatsplittern zersplittert wird, in einem vierten Schritt (4) die Nougatsplitter mit Pflanzenfett oder Pflanzenöl in einem Gewichtsverhältnis von 4:1 bis 3:2, vorzugsweise 2:1, zu einer breiigen Masse gemischt werden, in einem fünften Schritt (5) die breiige Masse in ein Conchiersystem eingeführt und in diesem während 10 bis 30 Stunden, vorzugsweise 15 bis 24 Stunden, bei einer Temperatur von 40 bis 60 °C, vorzugsweise zwischen 50 und 55°C, zu einer fertigen Aromapaste zerkleinert wird, bis die Korngrösse der Splitter weniger als 20 µm ist, und in einem sechsten Schritt (6) die fertige Aromapaste in luftdicht abschliessbare Produktgebinde abgefüllt wird.

2. Verfahren nach Anspruch 1, **dadurch gekennzeichnet, dass** das Pflanzenfett oder das Pflanzenöl Palmfett oder Palmöl aufweist.

3. Verfahren nach Anspruch 1 oder 2, **dadurch gekennzeichnet, dass** das Pflanzenfett oder das Pflanzenöl Kokosfett oder Kokosöl aufweist.

4. Verfahren nach einem der Ansprüche 1 bis 3, **dadurch gekennzeichnet, dass** das Pflanzenfett oder das Pflanzenöl Rapsfett oder Rapsöl aufweist.

5. Verfahren nach einem der Ansprüche 1 bis 4, **dadurch gekennzeichnet, dass** das Pflanzenfett oder das Pflanzenöl Kakaofett oder Kakaoöl aufweist.

6. Verfahren nach einem der Ansprüche 1 bis 5, **dadurch gekennzeichnet, dass** das Pflanzenfett oder das Pflanzenöl Milchfett oder Milchöl aufweist.

7. Aromapaste hergestellt nach einem der Verfahren gemäss Anspruch 1 bis 6, **dadurch gekennzeichnet, dass** sie wasserfrei ist und eine Korngrösse von weniger als 20 µm aufweist.

## Claims

1. A method for producing an anhydrous flavoring paste, **characterized in that**, in a first step (1), sugar and a powder based on milk or fruit are introduced into a melting pot in a ratio of 8:3 to 3:1, preferably 5:2 and mixed and heated at a temperature of 130 to 200°C for 10 to 40 minutes, preferably 20 to 30 minutes, to form a molten hot mass, in a second step (2), the molten hot mass is cooled by means of a cooling section, in a third step (3), the cooled mass is fragmented by means of a mechanical crusher into nougat fragments, in a fourth step (4), the nougat fragments are mixed with vegetable fat or vegetable oil in a weight ratio of 4:1 to 3:2, preferably 2:1, to form a pulpy mass, in a fifth step (5), the pulpy mass is introduced into a conching system and pulverized therein for 10 to 30 hours, preferably 15 to 24 hours, at a temperature of 40 to 60°C, preferably between 50 and 55°C, to form a finished flavoring paste, until the grain size of the fragments is less than 20 µm, and in a sixth step (6), the finished flavoring paste is decanted into airtight sealable product containers.

2. The method according to Claim 1, **characterized in that** the vegetable fat or the vegetable oil comprises palm fat or palm oil.

3. The method according to Claim 1 or 2, **characterized in that** the vegetable fat or the vegetable oil comprises coconut fat or coconut oil.

4. The method according to any one of Claims 1 to 3, **characterized in that** the vegetable fat or the vegetable oil comprises canola fat or canola oil.

5. The method according to any one of Claims 1 to 4, **characterized in that** the vegetable fat or the vegetable oil comprises cocoa fat or cocoa oil.

6. The method according to any one of Claims 1 to 5, **characterized in that** the vegetable fat or the vegetable oil comprises milk fat or milk oil.

7. A flavoring paste produced according to one of the methods according to Claims 1 to 6, **characterized in that** it is anhydrous and has a grain size of less than 20 µm.

## Revendications

1. Procédé pour la fabrication d'une pâte aromatisée sans eau, **caractérisé en ce que** dans une première étape (1), du sucre et une poudre à base de lait ou de fruits sont déposés dans un chaudron de fonte dans une proportion de 8 parts pour 3 à 3 parts pour 1, de préférence 5 parts pour 2, et mélangés et chauffés à une température de 130 à 200 °C pendant 10 à 40 minutes, de préférence 20 à 30 minutes, afin d'obtenir une masse fondue chaude, dans une deuxième étape (2) la masse fondue chaude est refroidie dans une section de refroidissement, dans une troisième étape (3) la masse refroidie est fragmentée au moyen d'un broyeur mécanique en éclats de nougat, dans une quatrième étape (4) les éclats de nougat sont mélangés avec une graisse végétale ou une huile végétale dans une proportion de 4 parts pour 1 à 3 parts pour 2, de préférence 2 parts pour 1, pour obtenir une masse pâteuse, dans une cinquième étape (5) la masse pâteuse est introduite dans un système de conchage et broyée dans celui-ci pendant 10 à 30 heures, de préférence 15 à 24 heures, à une température de 40 à 60 °C, de préférence de 50 à 55 °C, pour obtenir une pâte aromatisée finie, jusqu'à ce que la grosseur de grains des éclats soit inférieure à 20 µm, et dans une sixième étape (6), la pâte aromatisée finie est conditionnée dans des emballages de produit pouvant être fermés de façon étanche à l'air.

2. Procédé selon la revendication 1, **caractérisé en ce que** la graisse végétale ou l'huile végétale contient du beurre de palme ou de l'huile de palme.

3. Procédé selon la revendication 1 ou 2, **caractérisé en ce que** la graisse végétale ou l'huile végétale contient du beurre de noix de coco ou de l'huile de noix de coco.

4. Procédé selon l'une des revendications 1 à 3, **caractérisé en ce que** la graisse végétale ou l'huile végétale contient du beurre de colza ou de l'huile de colza.

5. Procédé selon l'une des revendications 1 à 4, **caractérisé en ce que** la graisse végétale ou l'huile végétale contient du beurre de cacao ou de l'huile de cacao.

6. Procédé selon l'une des revendications 1 à 5, **caractérisé en ce que** la graisse végétale ou l'huile végétale contient du beurre de lait ou de l'huile extraite du lait.

7. Pâte aromatique fabriquée selon un procédé selon la revendication 1 à 6, **caractérisé en ce qu'**elle ne contient pas d'eau et présente une grosseur de grains inférieure à 20 µm.
